# EUROPEAN PATENT APPLICATION

(11) **EP 2 637 051 A2**
(43) Date of publication of application: **11.09.2013**
(21) Application number: 13001112.5
(22) Date of filing: 05.03.2013
(51) Int. Cl.: G02B 6/42, G02B 6/34, G02B 6/30, G02B 6/27

(54) **Photonic flexible interconnect**

(30) Priority: 05.03.2012 US 201213412441
(71) Applicant: Aurrion, Inc., Goleta, CA 93117 (US)
(72) Inventor: Fish, Gregory Alan, Santa Barbara, CA 93111 (US)
(74) Representative: Samson & Partner

(57) **Abstract**

Embodiments of the invention describe a silicon photonic interconnect, formed from an SOI substrate, having a waveguide for receiving optical data from an integrated circuit. Said photonic interconnect may comprise a flexible interconnect including a polymer layer disposed on the SOI substrate. Said photonic interconnect may include an optical fiber component to send/receive optical data to/from optical components or devices.

The waveguide of the silicon photonic interconnect may be formed for butt or evanescent coupling to the integrated circuit, may include an optical grating for coupling to the integrated circuit, or may include an etched taper for providing an adiabatic transition to a waveguide of the integrated circuit. The optical fiber interconnect component may be a taper to create large, fiber matched mode sizes or v-groove arrangements to enable alignment of optical fibers, or may include vertical couplers or evanescent couplers mode matched to optical fibers or fiber receptacles.

## Description

### FIELD

Embodiments of the invention generally pertain to optical devices and more specifically to photonic flexible interconnects utilized by electronic and optical devices.

### BACKGROUND

Current state of the art solutions for optical connections to photonic chips are made through either free space coupling to optical fibers/polymers or direct butt coupling to fibers; these prior art coupling solutions may be in or out of the plane of the photonic chip. When these solutions are used for creating optical connections to high speed electronic chips, they require packaging solutions that deviate far from those used by the electronic packaging industry.

The problem with current state of the art free space coupling solutions is that they require hermetic (i.e., airtight) enclosures to avoid condensation onto lenses. Such enclosures are difficult and costly to manufacture, and require an additional optical waveguide solution to exist in a printed circuit board (PCB) used to optically interconnect electronic chips and circuit boards.

The problem with current state of the art direct butt coupling solutions is that the coupling fibers used are too stiff and brittle to be bent sharply without the risk of breaking; this significantly increases both the necessary package height in the case of vertical coupling to silicon (Si) ships, and the necessary die area when making horizontal coupling due to mechanical features required to align optical fibers.

What is needed is a way to make optical interfaces to Photonic integrated circuits (ICs) that is more compatible with electronic packaging. These interfaces should be compatible with electronic packaging (on one end) and with optical fiber connections (on the other end), be very flexible, reduce the coupling area on the photonic IC, and incur a low manufacturing cost.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.

**FIG. 1** is a top-view illustration of a photonic interconnect according to an embodiment of the invention.

**FIG. 2** is a side-view illustration of a photonic interconnect according to an embodiment of the invention.

**FIG. 3A, FIG. 3B and FIG. 3C** are side-view and top-view illustrations of a silicon photonic interconnect according to an embodiment of the invention.

**FIG. 4A, FIG. 4B and FIG. 4C** are side-view and top-view illustrations of a Si photonic interconnect according to an embodiment of the invention.

**FIG. 5A and FIG. 5B** are side-view illustrations of a silicon photonic interconnect according to an embodiment of the invention.

**FIG. 6A and FIG. 6B** are side-view illustrations of a silicon photonic interconnect according to an embodiment of the invention.

**FIG. 7A, 7B and 7C** are illustrations of a surface coupler to edge coupler with pitch conversion means according to an embodiment of the invention.

**FIG. 8A, 8B and 8C** are illustrations of an active photonic flexible interconnect according to an embodiment of the invention.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

### DESCRIPTION

Embodiments of the invention describe photonic flexible interconnects utilized by electronic and optical devices. Throughout this specification, several terms of art are used. These terms are to take on their ordinary meaning in the art from which they come, unless specifically defined herein or the context of their use would clearly suggest otherwise. In the following description numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

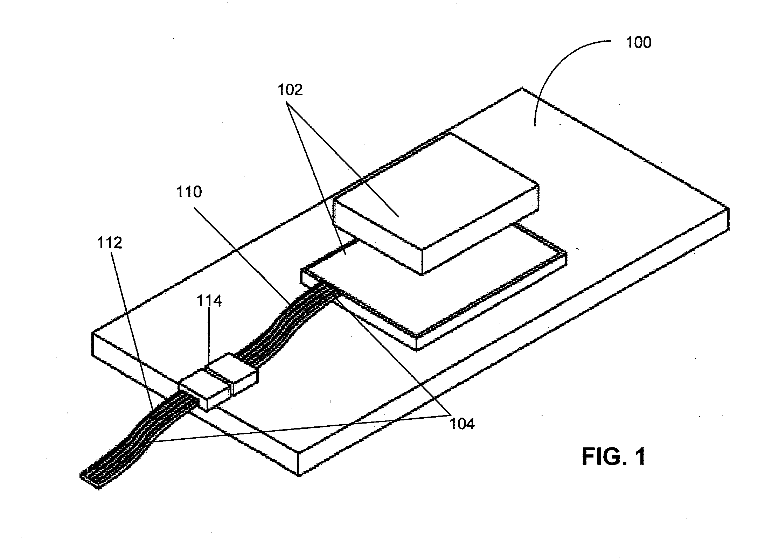

**FIG. 1** is a top-view illustration of a photonic interconnect according to an embodiment of the invention. In this embodiment, printed circuit board (PCB) 100 is shown to include integrated circuit (IC) package 102, which may comprise, for example, a Silicon (Si) Based System in Package, a System on a Chip (SoC) with photonics input/output (I/O), etc.

Optical interconnect 104 is shown to provide an optical interface for IC package 102. In this embodiment, optical interconnect 104 includes Si photonic interconnect component 110, fiber or waveguide interconnect component 112, and substrate 114 coupling both of said components together. As described below, in this embodiment optical interconnect 104 is a flexible interface solution that significantly reduces the coupling area necessary compared to prior art optical interconnect solutions.

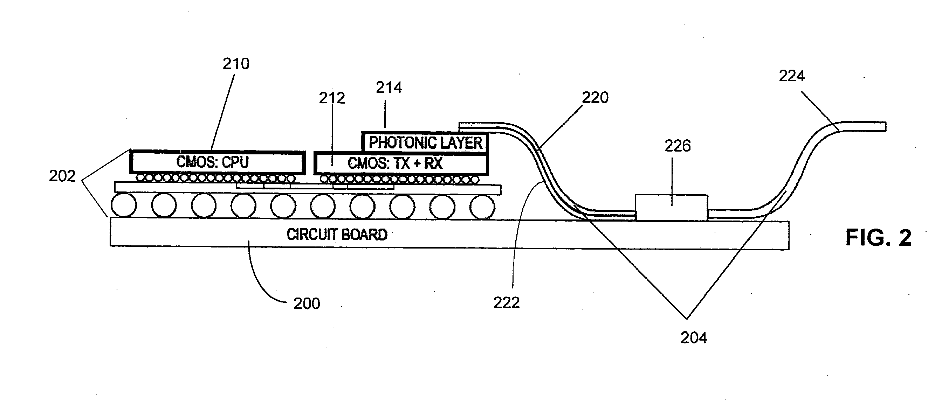

**FIG. 2** is a side-view illustration of a photonic interconnect according to an embodiment of the invention. In this embodiment, PCB 200 is shown to be electronically coupled to IC package 202. Said IC package includes central processing unit (CPU) package 210 electronically coupled to transmission/receiving component 212, which is further coupled to photonic layer 214. Said photonic layer receives and converts optical data to electric data, and vice versa.

In this embodiment, optical interconnect 204 includes a Si photonic interconnect component, shown to include flexible polymer layer 220 and Si photonic waveguide component 222 (described in further detail below). Other embodiments may not utilize said flexible polymer layer. Optical interconnect 204 further includes fiber interconnect component 224 to send/receive optical data to/from optical components or devices (not shown).

Said Si photonic interconnect component and fiber interconnect component are coupled together via substrate 226. In some embodiments, substrate 226 may be formed to act as a heat sinking material for embodiments including active optical components (described below). Fiber interconnect component 224 may comprise one or more tapers to create large, fiber matched mode sizes or v-groove arrangements to enable alignment of optical fibers; other embodiments may include vertical couplers or evanescent couplers that are mode matched to the optical fiber or fiber receptacle in the event an optical connector is desired.

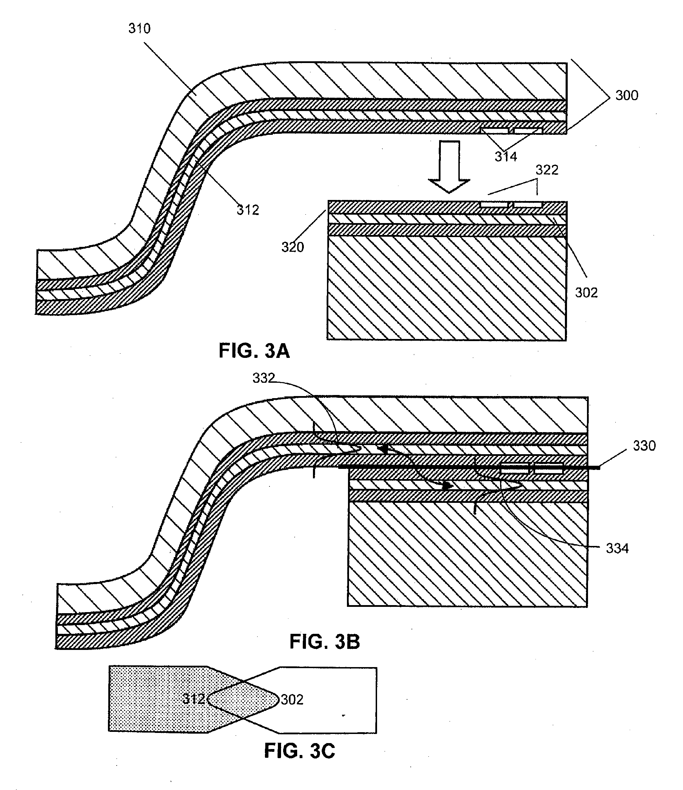

**FIG. 3A, FIG. 3B and FIG. 3C** are side-view and top-view illustrations of a Si photonic interconnect according to an embodiment of the invention. In this embodiment, Si photonic interconnect 300 and photonic layer 302 are optically coupled via adiabatic transfer means as described below.

Si photonic interconnect 300 includes polymer layer 310 and Si waveguide component 312, which may be formed by using silicon wafer processing to pattern the respective waveguide (similar to Si photonic processing). Said Si waveguide component is formed to couple optical data from photonic layer 302 via matching structures (i.e., waveguide components 312 and 320).

In this embodiment, waveguides 312 and 320 are electrically bonded via bonding pads 314 and 322, respectively. Said bonding pads transfer electrical signals between Si photonic interconnect 300 and photonic layer 302. As shown in FIG. 3B, said waveguides are optically bonded - i.e., "direct bonded" via the use of optical-grade adhesive, 330. In other embodiments, said waveguides may be molecularly bonded.

In this embodiment, waveguides 312 and 320 are parallel couplers that couple light between two parallel and different waveguides that are on top of each other, as shown in FIG. 3B, coupling light with these parallel couplers is based on adiabatic coupling. A waveguide transition is adiabatic if it occurs sufficiently slowly so as not to transfer energy from the occupied mode to other modes. In this embodiment, adiabatic coupling occurs via tapered structures in waveguides 312 and 302, as shown in FIG. 3C. Said tapered structures are monotonic (e.g., linear) variations in the width or height of the waveguide, which causes the mode to change its shape. An advantage of adiabatic coupling is that the transfer allows for misalignment between the waveguides 312 and 302 - i.e., misalignment does not affect performance. Adiabaticity also implies fault tolerance to most operational and fabrication errors. In this embodiment, representations of the fundamental mode within waveguides 312 and 320 are shown as elements 332 and 334, respectively. The taper of the waveguide cores are such that the transmission of the fundamental mode through the coupler is adiabatic. Thus, in this embodiment, high coupling efficiency occurs without lenses due to the matched mode shapes of the two couplers.

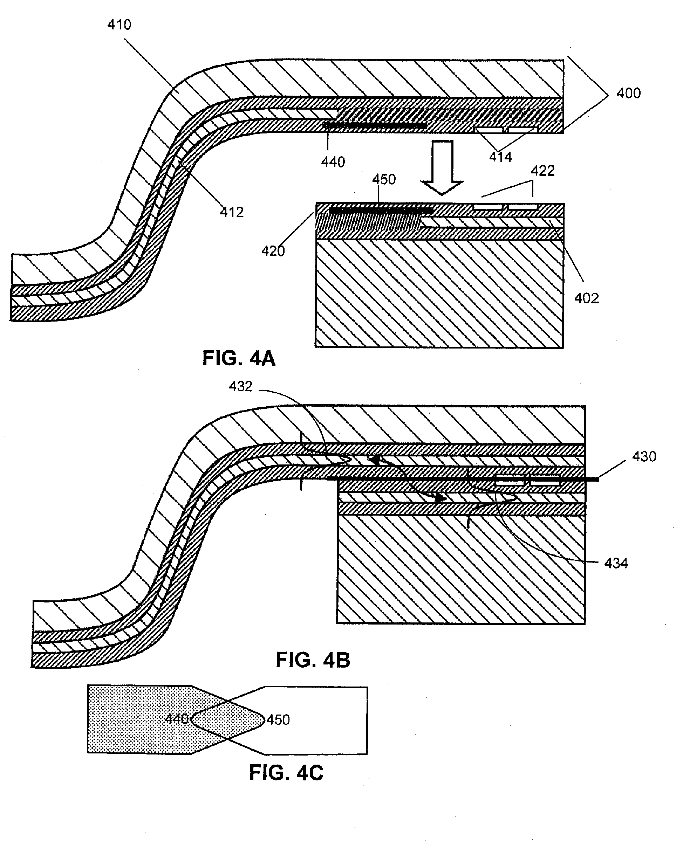

**FIG. 4A, FIG. 4B and FIG. 4C** are side-view and top-view illustrations of a Si photonic interconnect according to an embodiment of the invention. In this embodiment, Si photonic interconnect 400 and photonic layer 402 are optically coupled via adiabatic transfer means as described above. Similar to FIG. 3, Si photonic interconnect 400 includes polymer layer 410 and Si waveguide component 412, which may be formed by using silicon wafer processing to pattern the respective waveguide (similar to Si photonic processing). Said Si waveguide component is formed to couple optical data from photonic layer 402 via matching structures (i.e., waveguide components 412 and 420).

Si photonic interconnect 400 includes polymer layer 410 and Si waveguide component 412. In this embodiment, Si photonic interconnect 400 further includes dielectric waveguide component 440 coupled to SI waveguide component 412, while photonic layer 402 further includes dielectric waveguide component 450 coupled to waveguide component 420 (in other embodiments, only one of SI photonic interconnect 400 and photonic layer 402 may include a dielectric waveguide component. Said dielectric waveguide component 440 is formed to couple optical data from photonic layer 402 via matching structures (e.g., tapered structures, as shown in FIG. 4C). Said dielectric waveguide components may comprise a lower index of refraction that waveguide components 412 and 402 and transmit light having a larger mode, thereby increasing the alignment tolerance between Si photonic interconnect 400 and photonic layer 402.

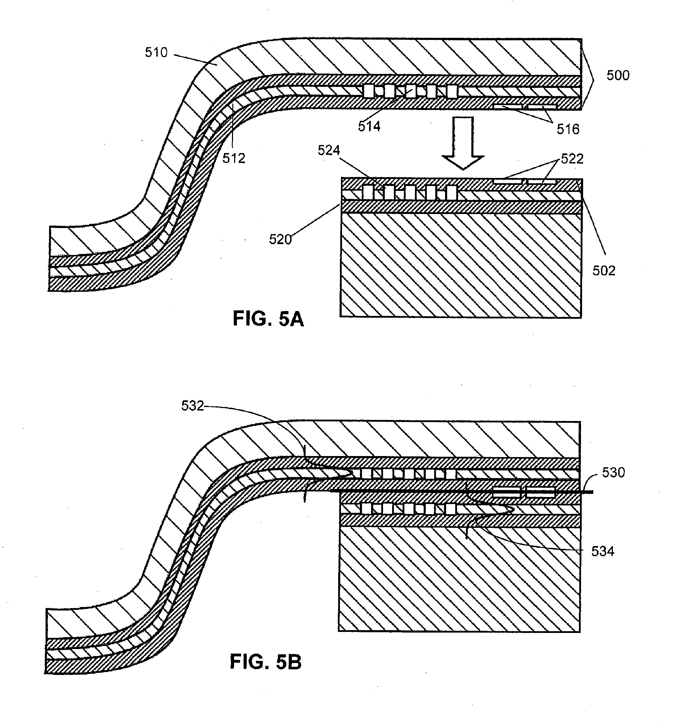

**FIG. 5A and FIG. 5B** are side-view illustrations of a Si photonic interconnect according to an embodiment of the invention. In this embodiment, Si photonic interconnect 500 and photonic layer 502 are optically coupled via grating transfer means as described below.

Si photonic interconnect 500 includes polymer layer 510 and Si waveguide component 512, which may be formed by using silicon wafer processing to pattern the respective waveguide (similar to Si photonic processing). Similar to the embodiments discussed above, waveguides 512 and 520 are electrically bonded via bonding pads 516 and 522, respectively, to vary the optical properties of each waveguide to which it is connected. As shown in FIG. 5B, said waveguides are optically bonded - i.e., "direct bonded" via the use of optical-grade adhesive, 530. Representations of the fundamental mode within waveguides 512 and 520 are shown as 532 and 534, respectively.

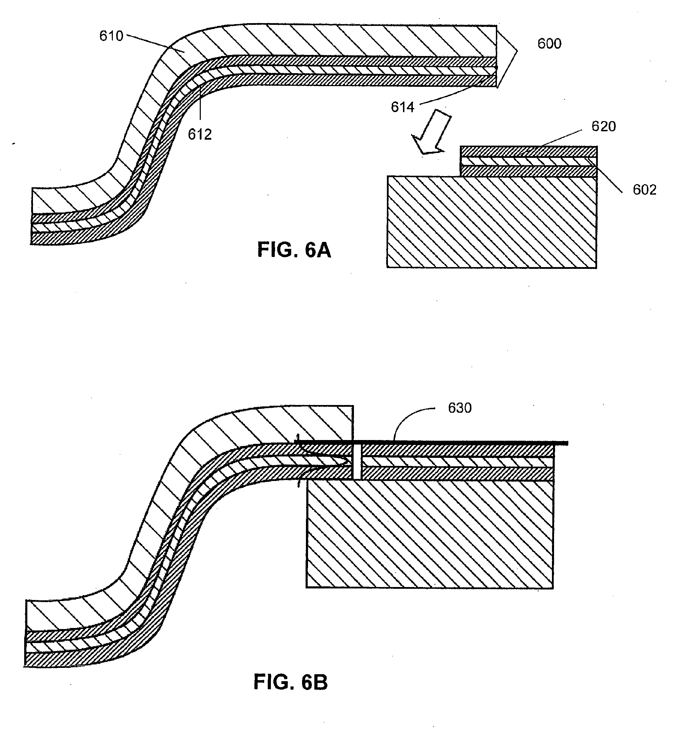

In this embodiment, waveguides 512 and 520 are parallel couplers that couple light between two parallel and different waveguides that are on top of each other, as shown in FIG. 5B. Coupling of light with these parallel couplers is based on grating-assisted coupling. As described above with reference to FIG 3A and 3B, when two waveguides are made from material with similar or identical indices of refraction, the evanescent coupling efficiency can be quite high and can suffice adiabatically without the assistance of a grating; however, in this embodiment the use of a gratings 514 and 524 make coupling even more efficient, and allows different refractive index materials or different waveguide dimensions to be used for waveguides 512 and 520. In embodiments where said waveguides are edge coupled (e.g., as shown in FIG. 6 and discussed below), the alignment tolerance is based on the mode size of each waveguide. In this embodiment, vertically coupling light via gratings 514 and 524 may increase the size of the mode in both directions, increasing the alignment tolerance between Si photonic interconnect 500 and photonic layer 502.

It is to be understood that while this example embodiment illustrates an interconnect from an IC to an optical fiber component, in other embodiments, interconnects may be used to for chip-to-chip connections (e.g., an embodiment similar to that of FIGs. 5A-5C, but also having another set of gratings to couple to a photonic layer of another IC).

**FIG. 6A and FIG. 6B** are side-view illustrations of a Si photonic interconnect according to an embodiment of the invention. In this embodiment, Si photonic interconnect 600 and photonic layer 602 are optically coupled via edge coupling means as described below.

Si photonic interconnect 600 includes polymer layer 610 and Si waveguide component 612, which may be formed by using silicon wafer processing to pattern the respective waveguide (similar to Si photonic processing) to match waveguide 620 of photonic layer 602.

Si waveguide component 612 includes edge coupler 614. In some embodiments, said edge coupler comprises an etched facet or cleaved and polished surface facet. In other embodiments, said edge coupler comprises a taper on an end of a waveguide. Mechanical features such as v-grooves to facilitate passive alignment of optical fibers to the edge coupler may be included (as described below). As shown in FIG. 6B, said waveguides are electrically bonded via bonding layer 630.

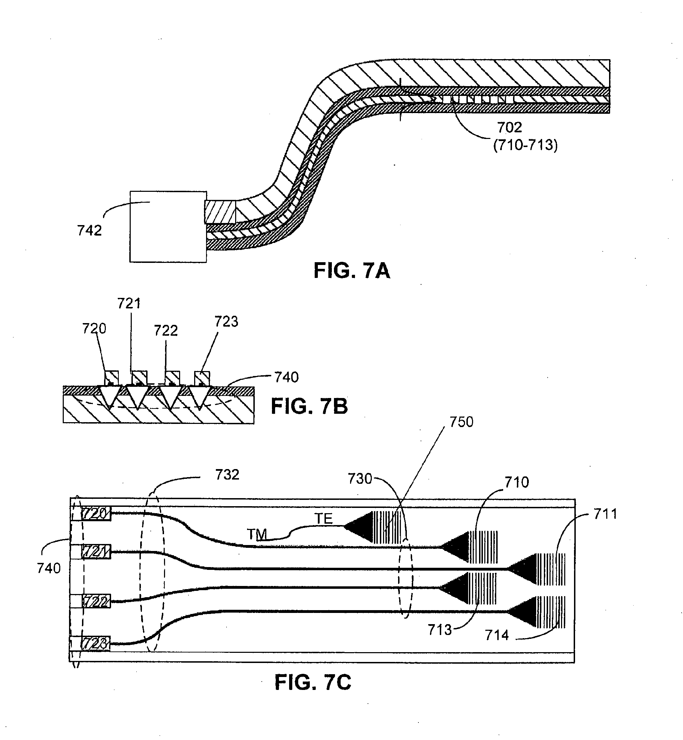

**FIG. 7A, 7B and 7C** are illustrations of a surface coupler to edge coupler with pitch conversion means according to an embodiment of the invention. In this embodiment, surface coupling means 702 is shown to comprise plurality of gratings 710, 711, 712 and 713 (similar to the gratings of FIG 5A/4B), to exchange optical data with edge coupling means 720, 721, 722 and 723, respectively.

In this embodiment, the variation in pitch between gratings 710-613 (shown as reference element 730) and edge coupling means 720-623 (shown as reference element 732) allows interconnect 700 to have pitch conversion functionality - i.e., said interconnect is capable of connecting two multi-fiber optical connecters with different pitches via a single component by adhering two connection members equipped with plural fiber holes with different pitches. In this embodiment, interconnect 700 includes v-grooves 740 to facilitate passive alignment of optical fibers to the edge coupler. Said v-grooves may be formed from Si substrate material, or any other functionally equivalent means.

In this embodiment the Si photonic interconnect may also perform the function of polarization management required for the photonic interconnect its connected to, where in a unknown polarization state is coupled into the edge coupled interface 742 and each polarization component of the incoming optical data is separated, optionally rotated and directed toward the surface coupling elements 720-723 (e.g., as illustrated by polarization splitter and/or rotator 750). This feature enables the photonic IC to operate in a single polarization, but still receive both polarizations of optical data.

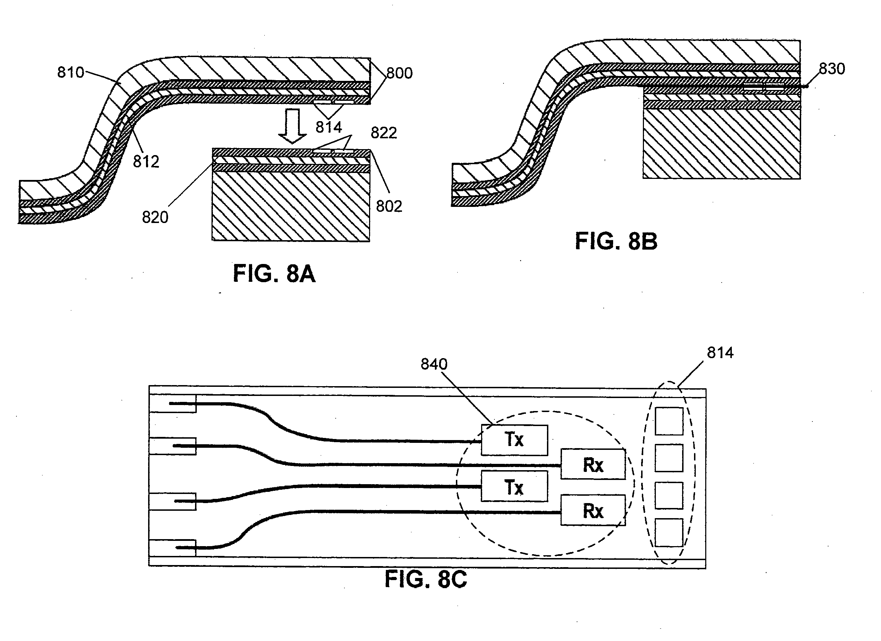

**FIG. 8A, 8B and 8C** are illustrations of an active photonic flexible interconnect according to an embodiment of the invention. In this embodiment, Si photonic interconnect 800 and photonic layer 802 are electrically coupled via electrodes 814 and 822 as described above..

Si photonic interconnect 800 includes polymer layer 810 and Si waveguide component 812, which may be formed by using silicon wafer processing to pattern the respective waveguide (similar to Si photonic processing). As shown in FIG. 8B, said waveguides are optically bonded - i.e., "direct bonded" via the use of optical-grade adhesive, 830.

In its active form, active optical components such as lasers, modulators, switches, detectors, etc., (shown as components 840) are added to the passive silicon photonics components. Interconnect metallization of the flexible optical interconnect 814 are now added such that it can be directly attached to the IC's electrical interconnect 822. In other words, the optical transceiver that was previously integrated with the IC in SoC solutions is now contained in the silicon photonic optical flex interconnect.

In this embodiment, electrical connections are made to the IC via jumpers (combinations of both electrical and optical connections are envisioned). Heat sinking material may also be used to dissipate heat from the active components. This heat sinking can be in the form of Si substrate material left underneath active components, heat spreading pieces bonded to the active portions of the silicon photonic optical flex interconnect while it is in wafer form after the substrate has been removed, or any other functionally equivalent means.

Reference throughout the foregoing specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout the specification are not necessarily all referring to the same embodiment. Furthermore, the particular features, structures or characteristics may be combined in any suitable manner in one or more embodiments. In addition, it is appreciated that the figures provided are for explanation purposes to persons ordinarily skilled in the art and that the drawings are not necessarily drawn to scale. It is to be understood that the various regions, layers and structures of figures may vary in size and dimensions.

In the foregoing detailed description, the method and apparatus of the present invention have been described with reference to specific exemplary embodiments thereof. It will, however, be evident that various modifications and changes may be made thereto without departing from the broader spirit and scope of the present invention. The present specification and figures are accordingly to be regarded as illustrative rather than restrictive.

## Claims

1. A silicon photonic interconnect, formed from a silicon on insulator (SOI) substrate, for coupling to an integrated circuit, the silicon photonic interconnect comprising:
a waveguide included in the SOI having a first optical mode; and
a coupling region for exchanging optical data between the waveguide included in the SOI and a second waveguide included in the integrated circuit, the coupling region having a second optical mode larger than the first optical mode.

2. The silicon photonic interconnect of claim 1, further comprising:
a flexible polymer layer disposed on the SOI substrate.

3. The silicon photonic interconnect of claim 1, wherein the coupling region is formed for evanescent coupling to the integrated circuit.

4. The silicon photonic interconnect of claim 1, the coupling region to include an optical grating for coupling to a second optical grating included in the integrated circuit.

5. The silicon photonic interconnect of claim 1, wherein the coupling region comprises an etched taper for providing an adiabatic transition to the second waveguide included in the integrated circuit.

6. The silicon photonic interconnect of claim 1, further comprising:
one or more electrical bond pads to electrically couple to the integrated circuit.

7. The silicon photonic interconnect of claim 1, further comprising:
a fiber coupling region for coupling to an optical fiber connection.

8. The silicon photonic interconnect of claim 7, the fiber coupling region to include one or more v-grooves for coupling to the optical fiber connection.

9. The silicon photonic interconnect of claim 7, the fiber coupling region to include a vertical coupler to redirect light in a substantially perpendicular direction.

10. The silicon photonic interconnect of claim 7, further comprising:
an evanescent coupler mode matched to the fiber coupling region.

11. The silicon photonic interconnect of claim 7, further comprising:
a fiber receptacle for receiving another optical fiber to be coupled to the fiber coupling region.

12. The silicon photonic interconnect of claim 1, further comprising:
one or more active components formed from the SOI substrate to receive optical data from the waveguide included in the SOI, wherein the one or more active components comprise at least one of a laser, a modulator, an optical switch, or a detector.

13. The silicon photonic interconnect of claim 1, further comprising:
heat spreading material formed from the SOI substrate.

14. A system comprising:
a printed circuit board (PCB) substrate;
a integrated circuit coupled to the PCB substrate; and
a silicon photonic interconnect, formed from a silicon on insulator (SOI) substrate, for coupling to the integrated circuit, the silicon photonic interconnect further comprising:
a waveguide included in the SOI having a first optical mode; and
a coupling region for exchanging optical data between the waveguide included in the SOI and a second waveguide included in the integrated circuit, the coupling region having a second optical mode larger than the first optical mode.

15. The system of claim 14, wherein the silicon photonic interconnect further comprises:
a flexible polymer layer disposed on the SOI substrate.

16. The system of claim 14, wherein the coupling region of the silicon photonic interconnect is formed for evanescent coupling to the integrated circuit.

17. The system of claim 14, the coupling region of the silicon photonic interconnect to include an optical grating for coupling to a second grating included in the integrated circuit.

18. The system of claim 14, wherein the waveguide of the silicon photonic interconnect includes an etched taper for providing an adiabatic transition to the second waveguide included in the integrated circuit.

19. The system of claim 14, the silicon photonic interconnect further comprising:
one or more electrical bond pads to electrically couple to the integrated circuit.

20. The system of claim 14, the silicon photonic interconnect further comprising:
a fiber coupling region for coupling to an optical fiber connection.

21. The system of claim 20, the fiber coupling region of the silicon photonic interconnect to include one or more v-grooves for coupling to an optical fiber connection.

22. The system of claim 20, the fiber coupling region of the silicon photonic interconnect to include a vertical coupler to redirect light in a substantially perpendicular direction.

23. The system of claim 20, the silicon photonic interconnect further comprising:
an evanescent coupler mode matched to the fiber coupling region.

24. The system of claim 20, the silicon photonic interconnect further comprising:
a fiber receptacle for receiving another optical fiber to be coupled to the fiber coupling region.

25. The system of claim 14, the silicon photonic interconnect further comprising:
one or more active components formed from the SOI substrate to receive optical data from the waveguide of the silicon photonic interconnect, wherein the one or more active components comprise at least one of a laser, a modulator, an optical switch, or a detector.

26. The system of claim 14, the silicon photonic interconnect further comprising:
heat spreading material formed from the SOI substrate.
